(19) Europäisches Patentamt
European Patent Office
Office européen des brevets

(11) **EP 2 300 297 B1**

(12) **EUROPÄISCHE PATENTSCHRIFT**

(45) Veröffentlichungstag und Bekanntmachung des Hinweises auf die Patenterteilung:
**19.09.2012 Patentblatt 2012/38**

(21) Anmeldenummer: **09780720.0**

(22) Anmeldetag: **16.07.2009**

(51) Int Cl.:
*B60W 20/00* (2006.01)     *B60K 6/48* (2007.10)
*B60W 10/06* (2006.01)     *B60W 10/02* (2006.01)
*B60W 10/08* (2006.01)     *B60K 6/387* (2007.10)

(86) Internationale Anmeldenummer:
**PCT/EP2009/059165**

(87) Internationale Veröffentlichungsnummer:
**WO 2010/010039 (28.01.2010 Gazette 2010/04)**

(54) **VERFAHREN ZUM BETREIBEN EINES ANTRIEBSSTRANGS**

METHOD FOR OPERATION OF A DRIVE TRAIN

PROCÉDÉ POUR FAIRE FONCTIONNER UN GROUPE PROPULSEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.07.2008 DE 102008040660**

(43) Veröffentlichungstag der Anmeldung:
**30.03.2011 Patentblatt 2011/13**

(73) Patentinhaber: **ZF Friedrichshafen AG**
**88038 Friedrichshafen (DE)**

(72) Erfinder:
• **GROMUS, Michael**
**88097 Eriskirch (DE)**
• **ALLGAIER, Bernd**
**88079 Kressbronn (DE)**
• **TENBROCK, Friedrich**
**88085 Langenargen (DE)**

(56) Entgegenhaltungen:
**EP-A- 0 698 522          EP-A- 1 122 110**
**EP-A- 1 418 325          WO-A-2006/106254**
**DE-A1-102004 024 213**

**Beschreibung**

Die Erfindung betrifft ein Verfahren zum Betreiben eines zumindest ein Getriebe und einen Hybridantrieb umfassenden Antriebsstrangs eines Kraftfahrzeugs nach dem Oberbegriff des Anspruchs 1 .

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft ein Verfahren zum Betreiben eines Antriebsstrangs, der zumindest ein Getriebe und als Antriebsaggregat einen Hybridantrieb mit einem Verbrennungsmotor und einem Elektromotor umfasst.

Bei einem Antriebsstrang mit einem sogenannten Parallelhybridantrieb ist zwischen den Verbrennungsmotor und den Elektromotor des Hybridantriebs eine Kupplung geschaltet, über die der Verbrennungsmotor des Hybridantriebs von einem Abtrieb des Antriebsstrangs abgekoppelt werden kann. Beim Anfahren eines solchen Antriebsstrangs mit einem Parallelhybridantrieb ist der Verbrennungsmotor typischerweise ausgeschaltet und die zwischen den Verbrennungsmotor und den Elektromotor des Hybridantriebs geschaltete Kupplung geöffnet.

Dann, wenn der ausgeschaltete Verbrennungsmotor gestartet werden soll, kann derselbe durch zumindest teilweises Schließen der zwischen den Verbrennungsmotor und den Elektromotor geschalteten Kupplung vom Elektromotor aus angeschleppt werden, wobei zum optimalen Durchführen des Anschleppens der Zeitpunkt bekannt sein muss, ab welchem der Verbrennungsmotor gestartet ist und aktiv ein Moment bereitstellt. Bislang wird dieser Zeitpunkt in einer Motorsteuerungseinrichtung über die Anzahl der Zündungen des Verbrennungsmotors ermittelt. Dies ist jedoch relativ ungenau.

Das Dokument EP 1122110 offenbart ein Verfahren gemäß dem Oberbegriff des Anspruchs 1.

Hiervon ausgehend liegt der vorliegenden Erfindung das Problem zu Grunde, ein neuartiges Verfahren zum Betreiben eines ein Getriebe und einen Hybridantrieb umfassenden Antriebsstrangs zu schaffen, mit welchem der Zeitpunkt, ab welchem beim Anschleppen des Verbrennungsmotors derselbe gestartet ist und aktiv ein Moment bereitstellt, genau ermittelbar ist.

Dieses Problem wird nach einem nicht erfindungsgemäßen Aspekt durch ein Verfahren wie folgt gelöst. Hiernach wird beim Anschleppen des Verbrennungsmotors mit Hilfe des Elektromotors die zwischen den Verbrennungsmotor und den Elektromotor geschaltete Kupplung derart schlupfend geschlossen, dass dieselbe ein konstantes Kupplungsmoment überträgt, wobei ein sich beim Anschleppen tatsächlich einstellender Ist-Gradient der Verbrennungsmotordrehzahl mit einem Soll-Gradienten der Verbrennungsmotordrehzahl verglichen wird, und wobei dann, wenn der Ist-Gradient größer als der Soll-Gradient ist, auf einen gestarteten Verbrennungsmotor geschlossen wird, der aktiv ein Moment bereitstellt.

Nach einem erfindungsgemäßen Aspekt wird dieses Problem durch ein Verfahren gemäß Anspruch 1 gelöst. Hiernach wird beim Anschleppen des Verbrennungsmotors ein sich tatsächlich einstellendes Ist-Moment im Antriebsstrang mit einem Soll-Moment verglichen, wobei dann, wenn das Ist-Moment größer als das Soll-Moment ist, auf einen gestarteten Verbrennungsmotor geschlossen wird, der aktiv ein Moment bereitstellt.

Mit beiden Verfahren zum Betreiben eines ein Getriebe und einen Hybridantrieb umfassenden Antriebsstrangs kann der Zeitpunkt, ab welchem beim Anschleppen des Verbrennungsmotors derselbe gestartet ist und aktiv ein Moment bereitstellt, genau ermittelt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

Fig. 1 ein Antriebsstrangschema eines Kraftfahrzeugs, bei welchem das erfindungsgemäße Verfahren einsetzbar ist;

Fig. 2 ein alternatives Antriebsstrangschema eines Kraftfahrzeugs, bei welchem das erfindungsgemäße Verfahren einsetzbar ist;

Fig. 3 ein Diagramm zur Verdeutlichung des nicht erfindungsgemäßen Verfahrens.

Die hier vorliegende Erfindung betrifft ein Verfahren zum Betreiben eines zumindest ein Getriebe und einen Hybridantrieb umfassenden Antriebsstrangs eines Kraftfahrzeugs.

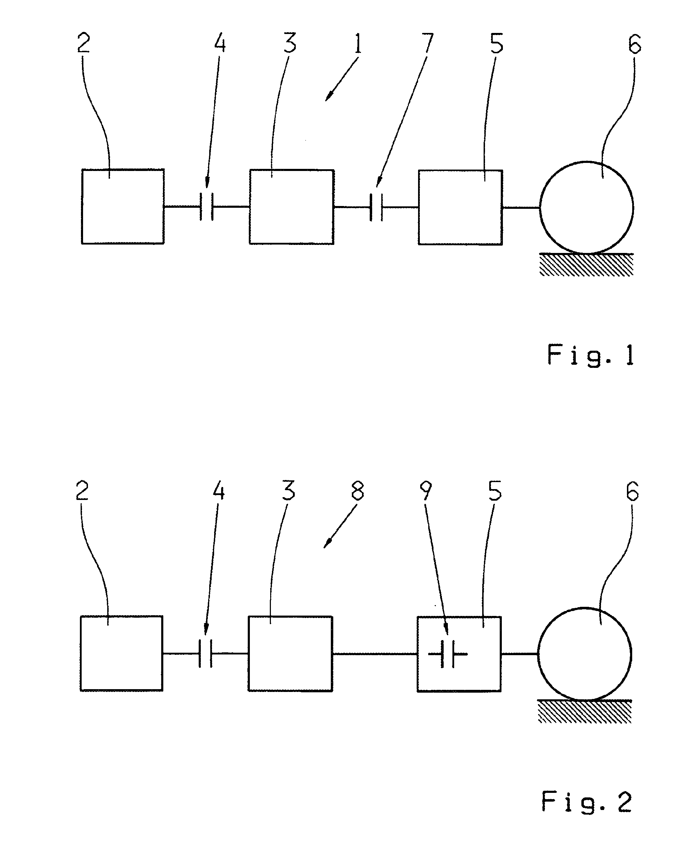

Fig. 1 zeigt exemplarisch ein Antriebsstrangschema eines Kraftfahrzeugs, bei welchen das erfindungsgemäße Verfahren einsetzbar ist. So zeigt Fig. 1 ein Schema eines Antriebsstrangs 1 eines Kraftfahrzeugs, wobei der Antriebsstrang 1 gemäß Fig. 1 einen Hybridantrieb umfasst, der von einem Verbrennungsmotor 2 und einem Elektromotor 3 gebildet ist. Zwischen den Verbrennungsmotor 2 und den Elektromotor 3 ist eine Kupplung 4 geschaltet, die dann, wenn der Antriebsstrang 1 ausschließlich vom Elektromotor 3 betrieben wird, geöffnet ist. Neben dem Hybridantrieb umfasst der Antriebsstrang 1 gemäß Fig. 1 weiterhin ein Getriebe 5, welches das vom Hybridantrieb bereitgestellte Zugkraftangebot auf einem Abtrieb 6, nämlich anzutreibenden Rädern, des Antriebsstrangs umsetzt. Das Getriebe kann z. B. als Automatgetriebe oder als automatisiertes Getriebe ausgeführt sein. Bei einem Automatgetriebe werden Schaltungen ohne Zugkraftunterbrechung und bei einem automatisierten Getriebe werden Schaltungen mit Zugkraftunterbrechung ausgeführt.

Beim Antriebsstrang der Fig. 1 ist zwischen den Elektromotor 3 des Hybridantriebs und das Getriebe 5 eine weitere Kupplung 7 geschaltet. Diese Kupplung 7 dient als getriebeexternes Anfahrelement beim elektromotorischen Anfahren.

Fig. 2 zeigt exemplarisch ein weiteres Antriebsstrangschema eines Kraftfahrzeugs, bei welchen das erfindungsgemäße Verfahren einsetzbar ist, wobei sich der Antriebsstrang 8 des Antriebsstrangschemas der Fig. 2 vom Antriebsstrang 1 des Antriebsstrangschemas der Fig. 1 dadurch unterscheidet, dass die Kupplung 7 bzw. das getriebeexterne Anfahrelement entfällt und durch ein getriebeinternes Anfahrelement 9 ersetzt ist.

Die hier vorliegende Erfindung betrifft ein Verfahren zum Betreiben eines solchen Antriebsstrangs mit einem Getriebe und einem Hybridantrieb, nämlich solche Details, die das Anschleppen eines ausgeschalteten Verbrennungsmotors 2 mit Hilfe des Elektromotors 3 des Hybridantriebs betreffen, um so beim Anschleppen des Verbrennungsmotors 2 den Zeitpunkt, ab welchem derselbe gestartet ist und aktiv ein Moment bereitstellt, genau zu ermitteln.

Nach einem nicht erfindungsgemäßen Aspekt wird beim Anschleppen des Verbrennungsmotors 2 mit Hilfe des Elektromotors 3 die zwischen den Verbrennungsmotor 2 und den Elektromotor 3 geschaltete Kupplung 4 derart schlupfend geschlossen, dass dieselbe ein konstantes Kupplungsmoment $M_K$ überträgt. In diesem Fall erhöht sich beim Anschleppen nach dem sogenannten Losbrechen des Verbrennungsmotors 2 die Drehzahl $n_{VM}$ desselben linear. Beim Anschleppen wird dann nach dem nicht erfindungsgemäßen Aspekt ein sich beim Anschleppen des Verbrennungsmotors 2 tatsächlich einstellender Ist-Gradient der Verbrennungsmotordrehzahl $n_{VM}$ ermittelt und mit einem Soll-Gradienten der Verbrennungsmotordrehzahl $n_{VM}$ verglichen.

Dann, wenn der Ist-Gradient der Verbrennungsmotordrehzahl größer als der Soll-Gradient ist, wird auf einen gestarteten Verbrennungsmotor geschlossen, der aktiv ein Moment bereitstellt. Dabei wird vorzugsweise so vorgegangen, dass dann, wenn der ermittelte Ist-Gradient der Verbrennungsmotordrehzahl größer als der vorgegebene Soll-Gradient zuzüglich einer Sicherheitsschwelle ist, auf einen gestarteten Verbrennungsmotor geschlossen wird, der aktiv ein Moment bereitstellt.

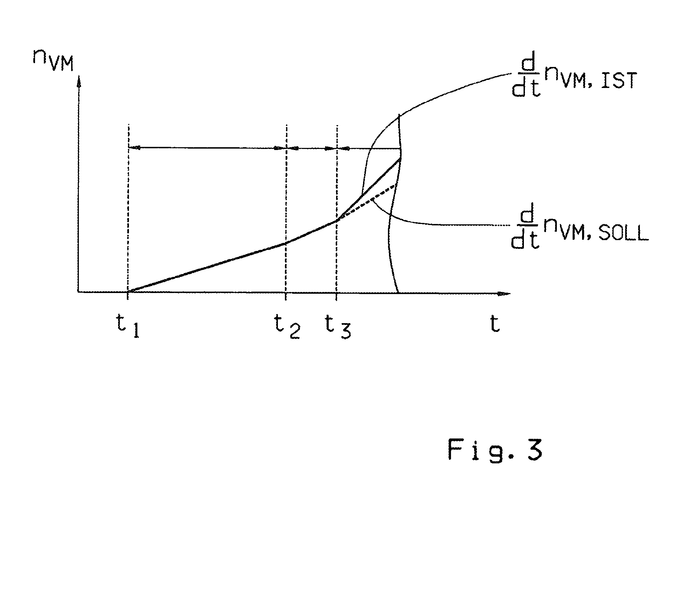

Fig. 3 verdeutlicht das nicht erfindungsgemäße Verfahren anhand eines Diagramms, wobei zum Zeitpunkt $t_1$ der Verbrennungsmotor losbricht und zum Zeitpunkt $t_2$ derselbe physikalisch zündet, ohne jedoch aktiv ein Moment am Abtrieb 6 bereitzustellen.

Ab dem Zeitpunkt $t_3$ stellt der Verbrennungsmotor 2 aktiv ein Moment am Abtrieb 6 bereit, wobei ab dem Zeitpunkt $t_3$ der sich tatsächlich einstellende Ist-Gradient der Verbrennungsmotordrehzahl d/dt $n_{VM,IST}$ vom Soll-Gradienten der Verbrennungsmotordrehzahl d/dt $n_{VM,SOLL}$ abweicht. Der Soll-Gradient für die Verbrennungsmotordrehzahl ist in einer Steuerungseinrichtung des Antriebsstrangs als Applikationsparameter vorgegeben.

Dann, wenn auf einen gestarteten Verbrennungsmotor geschlossen wird, wird das vom Verbrennungsmotor 2 bereitgestellte Verbrennungsmotormoment $M_{VM}$ wie folgt berechnet:

$$M_{VM} = \frac{dn_{VM}(t)}{dt} * J_{VM} - M_K$$

wobei $n_{VM}$ die Verbrennungsmotordrehzahl ist, wobei $J_{VM}$ das Trägheitsmoment des Verbrennungsmotors ist, und wobei $M_K$ das Kupplungsmoment ist, welches die zwischen den Verbrennungsmotor 2 und den Elektromotor 3 geschaltete Kupplung 4 überträgt.

Nach dem nicht erfindungsgemäßen Aspekt wird demnach ein sich beim Anschleppen des Verbrennungsmotors 2 ausbildender Ist-Gradient der Verbrennungsmotor-Drehzahl mit einer Drehzahlgradientenschwelle verglichen, wobei dann, wenn der Ist-Gradient größer als die Drehzahlgradientenschwelle ist, auf einen gestarteten Verbrennungsmotor 2 geschlossen wird. Hiermit kann genau der Zeitpunkt bestimmt werden, ab welchem der Verbrennungsmotor 2 gestartet ist und aktiv ein Moment bereitstellt.

Nach einem erfindungsgemäßen Aspekt wird zur Bestimmung des Zeitpunkts, ab welchem der Verbrennungsmotor 2 gestartet ist und aktiv ein Moment bereitstellt, beim Anschleppen des Verbrennungsmotors für den Antriebsstrang eine Momentbilanz bestellt, in dem sich ein tatsächlich einstellendes Ist-Moment im Antriebsstrang mit einem vorgegebenen Soll-Moment verglichen wird, wobei dann, wenn das Ist-Moment größer als das Soll-Moment ist, auf einen gestarteten Verbrennungsmotor 2 geschlossen wird, der ein Moment bereitstellt.

Hierbei wird vorzugsweise so vorgegangen, dass dann, wenn das Ist-Moment größer als das vorgegebene Soll-Moment zuzüglich einer Sicherheitsschwelle ist, auf einen gestarteten Verbrennungsmotor geschlossen wird, der aktiv ein Moment bereitstellt.

Dann, wenn hierbei auf einen gestarteten Verbrennungsmotor 2 geschlossen wird und die zwischen den Verbrennungsmotor 2 und den Elektromotor 3 geschaltete Kupplung 4 schlupfend geschlossen ist, wird das vom Verbrennungsmotor 2 bereitgestellte Verbrennungsmotormoment $M_{VM}$ unter Verwendung der folgenden Gleichung berechnet:

$$M_{VM} = \frac{dn_{VM}(t)}{dt} * J_{VM} - M_K$$

wobei $n_{VM}$ die Verbrennungsmotordrehzahl ist, wobei $J_{VM}$ das Trägheitsmoment des Verbrennungsmotors ist, und wobei $M_K$ das Kupplungsmoment ist, welches die zwischen den Verbrennungsmotor 2 und den Elektromotor 3 geschaltete Kupplung 4 überträgt.

Dann hingegen, wenn auf einen gestarteten Verbrennungsmotor 2 geschlossen wird und die zwischen den Verbrennungsmotor 2 und den Elektromotor 3 geschaltete Kupplung 4 vollständig geschlossen ist, wird das vom Verbrennungsmotor 2 bereitgestellte Verbrennungsmotormoment $M_{VM}$ unter Verwendung der folgenden Gleichung berechnet:

$$M_{VM} = \frac{dn_{EM}(t)}{dt} * J_{GES} - M_{EM}$$

wobei $n_{EM}$ die Elektromotordrehzahl ist, wobei $J_{GES}$ das Trägheitsmoment des gesamten Antriebsstrangs ist, und wobei $M_{EM}$ das vom Elektromotor 3 bereitgestellte Elektromotormoment ist.

Dann, wenn im Zusammenhang mit dem erfindungsgemäßen Aspekt beim Anschleppen des Verbrennungsmotors 2 mit Hilfe des Elektromotors 3 bei vollständig geschlossener Kupplung 4 für die Elektromotordrehzahl eine Regelung mit Integralregelanteil durchgeführt wird, kann aus dem Integralregelanteil abgeleitet werden, ob der Verbrennungsmotor gestartet ist und aktiv ein Moment für den Abtrieb des Antriebsstrangs bereitstellt. Dann, wenn hierbei der Integralregelanteil fällt, insbesondere unter einen vorgegebenen Grenzwert fällt, wird auf einen gestarteten Verbrennungsmotor geschlossen, der aktiv für den Abtrieb des Antriebsstrangs ein Moment bereitstellt.

Auch mit dem erfindungsgemäßen Aspekt kann der Zeitpunkt, ab welchem beim Anschleppen des Verbrennungsmotors 2 derselbe am Abtrieb aktiv ein Moment bereitstellt, genau ermittelt werden.

Bezugszeichen

1    Antriebsstrang
2    Verbrennungsmotor
3    Elektromotor
4    Kupplung
5    Getriebe
6    Abtrieb
7    Kupplung / getriebeexternes Anfahrelement
8    Antriebsstrang
9    getriebeinternes Anfahrelement

**Patentansprüche**

**1.** Verfahren zum Betreiben eines Antriebsstrangs eines Kraftfahrzeugs, wobei der Antriebsstrang zumindest einen Hybridantrieb mit einem Verbrennungsmotor (2) und einem Elektromotor (3), eine zwischen den Verbrennungsmotor (2) und den Elektromotor (3) geschaltete Kupplung (4), ein zwischen dem Hybridantrieb und einem Abtrieb (6) angeordnetes Getriebe (5), sowie vorzugsweise ein getriebeinternes (9) oder getriebeexternes (7) Anfahrelement umfasst, **dadurch gekennzeichnet, dass** beim Anschleppen des Verbrennungsmotors (2) ein sich tatsächlich einstellendes Ist-Moment im Antriebsstrang mit einem Soll-Moment verglichen wird, wobei dann, wenn das Ist-Moment größer als das Soll-Moment ist, auf einen gestarteten Verbrennungsmotor (2) geschlossen wird, der aktiv ein Moment bereitstellt, wobei dann, wenn die zwischen den Verbrennungsmotor (2) und den Elektromotor (3) geschaltete Kupplung (4) vollständig geschlossen ist und für die Elektromotordrehzahl eine Regelung mit Integralregelanteil durchgeführt wird, und dann, wenn bei der Regelung der Elektromotordrehzahl der Integralregelanteil fällt, auf einen gestarteten Verbrennungsmotor (2) geschlossen wird, der aktiv ein Moment bereitstellt.

**2.** Verfahren nach Anspruch 1, **dadurch gekennzeichnet, dass** dann, wenn das Ist-Moment größer als das vorgegebene Soll-Moment plus eine Sicherheitsschwelle ist, auf einen gestarteten Verbrennungsmotor geschlossen wird, der aktiv ein Moment bereitstellt.

**3.** Verfahren nach Anspruch 1 oder 2, **dadurch gekennzeichnet, dass** dann, wenn bei der Regelung der Elektromotordrehzahl der Integralregelanteil unter einen vorgegebenen Grenzwert fällt, auf einen gestarteten Verbrennungsmotor geschlossen wird, der aktiv ein Moment bereitstellt.

**4.** Verfahren nach einem der Ansprüche 1 bis 3, **dadurch gekennzeichnet, dass** dann, wenn auf einen gestarteten Verbrennungsmotor geschlossen wird und die zwischen den Verbrennungsmotor und den Elektromotor geschaltete Kupplung schlupfend geschlossen ist, das vom Verbrennungsmotor bereitgestellte Verbrennungsmotormoment $M_{VM}$ unter Verwendung der folgenden Gleichung berechnet wird:

$$M_{VM} = \frac{dn_{VM}(t)}{dt} * J_{VM} - M_K$$

wobei $n_{VM}$ die Verbrennungsmotordrehzahl ist, wobei $J_{VM}$ das Trägheitsmoment des Verbrennungsmotors ist, und wobei $M_K$ das Kupplungsmoment ist, welches die zwischen den Verbrennungsmotor und den Elektromotor geschaltete Kupplung überträgt.

5. Verfahren nach einem der Ansprüche 1 bis 3, **dadurch gekennzeichnet, dass** dann, wenn auf einen gestarteten Verbrennungsmotor geschlossen wird und die zwischen den Verbrennungsmotor und den Elektromotor geschaltete Kupplung vollständig geschlossen ist, das vom Verbrennungsmotor bereitgestellte Verbrennungsmotormoment $M_{VM}$ unter Verwendung der folgenden Gleichung berechnet wird:

$$M_{VM} = \frac{dn_{EM}(t)}{dt} * J_{GES} - M_{EM}$$

wobei $n_{EM}$ die Elektromotordrehzahl ist, wobei $J_{GES}$ das Trägheitsmoment des gesamten Antriebsstrangs ist, und wobei $M_{EM}$ das vom Elektromotor bereitgestellte Elektromotormoment ist.

**Claims**

1. Method for operating a drive train of a motor vehicle, wherein the drive train comprises at least one hybrid drive with an internal combustion engine (2) and an electric motor (3), a clutch (4) which is connected between the internal combustion engine (2) and the electric motor (3), a gearbox (5) which is arranged between the hybrid drive and an output (6), and preferably a gearbox internal (9) or gearbox external (7) starter element, **characterized in that** when the internal combustion engine (2) is tow-started an actual torque which actually occurs in the drive train is compared with a setpoint torque, wherein when the actual torque is larger than the setpoint torque, it is concluded that there is a started internal combustion engine (2) which is actively making available a torque, wherein when the clutch (4) which is connected between the internal combustion engine (2) and the electric motor (3) is completely closed and control is carried out with an integral control component for the electric motor rotational speed, and when the integral control component drops during the control of the electric motor rotational speed, it is concluded that there is a started internal combustion engine (2) which is active in making available a torque.

2. Method according to Claim 1, **characterized in that** when the actual torque is larger than the predefined setpoint torque plus a safety threshold, it is concluded that there is a started internal combustion engine which is actively making available a torque.

3. Method according to Claim 1 or 2, **characterized in that** when the integral control component drops below a predefined limiting value during the control of the electric motor rotational speed, it is concluded that there is a started internal combustion engine which is actively making available a torque.

4. Method according to one of Claims 1 to 3, **characterized in that** when it is concluded that there is a started internal combustion engine and the clutch which is connected between the internal combustion engine and the electric motor is closed in slipping fashion, the internal combustion engine torque $M_{VM}$ which is made available by the internal combustion engine is calculated using the following equation:

$$M_{VM} = \frac{dn_{VM}(t)}{dt} * J_{VM} - M_K$$

where $n_{VM}$ is the rotational speed of the internal combustion engine, where $J_{VM}$ is the moment of inertia of the internal combustion engine, and where $M_K$ is the clutch torque which is transmitted by the clutch which is connected between the internal combustion engine and the electric motor.

5. Method according to one of Claims 1 to 3, **characterized in that** when it is concluded that there is a started internal combustion engine and the clutch which is connected between the internal combustion engine and the electric motor is completely closed, the internal combustion engine torque $M_{VM}$ which is made available by the internal combustion engine is calculated using the following equation:

$$M_{VM} = \frac{dn_{EM}(t)}{dt} * J_{GES} - M_{EM}$$

where $n_{EM}$ is the rotational speed of the electric motor, where $J_{GES}$ is the moment of inertia of the entire drive train, and where $M_{EM}$ is the electric motor torque which is made available by the electric motor.

**Revendications**

1. Procédé de conduite du train d'entraînement d'un véhicule automobile, dans lequel le train d'entraînement comporte au moins un entraînement hybride doté d'un moteur à combustion interne (2) et d'un moteur électrique (3), d'un embrayage (4) raccordé entre le moteur à combustion interne (2) et le moteur électrique (3), d'une transmission (5) disposée entre l'entraînement hybride et une partie entraînée (6) et de préférence d'un élément de démarrage (9) situé à l'intérieur de la transmission ou d'un élément de démarrage (7) situé à l'extérieur de la transmission, **caractérisé en ce que**

lors de la mise en charge du moteur à combustion interne (2), le couple effectif qui s'établit effectivement dans le train d'entraînement est comparé à un couple de consigne et si le couple effectif est supérieur au couple de consigne, il est conclu que le moteur à combustion interne (2) qui délivre activement un couple a été démarré et

**en ce que** si l'embrayage (4) raccordé entre le moteur à combustion interne (2) et le moteur électrique (3) est complètement fermé, si une régulation à partie intégrale du régime du moteur électrique est réalisée et si lors de la régulation du régime du moteur électrique la partie intégrale tombe, il est conclu que le moteur à combustion interne (2) qui délivre activement un moment a démarré.

2. Procédé selon la revendication 1, **caractérisé en ce que** lorsque le couple effectif est supérieur au couple de consigne prédéterminé plus un seuil de sécurité, il est conclu que le moteur à combustion interne qui délivre activement un couple a démarré.

3. Procédé selon les revendications 1 ou 2, **caractérisé en ce que** si lors de la régulation du régime du moteur électrique la partie intégrale tombe en dessous d'une valeur limite prédéterminée, il est conclu que le moteur à combustion interne qui délivre activement un couple a démarré.

4. Procédé selon l'une des revendications 1 à 3, **caractérisé en ce que** s'il est conclu que le moteur à combustion interne a démarré et si l'embrayage raccordé entre le moteur à combustion interne et le moteur électrique est fermé et patine, le couple $M_{VM}$ du moteur à combustion interne délivré par le moteur à combustion interne est calculé en utilisant l'équation ci-dessous :

$$M_{VM} = \frac{dn_{VM}(t)}{dt} * J_{VM} - M_K$$

dans laquelle $n_{VM}$ est le régime du moteur à combustion interne, $J_{VM}$ est le couple d'inertie du moteur à combustion interne et $M_K$ est le couple d'embrayage que l'embrayage raccordé entre le moteur à combustion interne et le moteur électrique transmet.

5. Procédé selon l'une des revendications 1 à 3, **caractérisé en ce que** s'il est conclu que le moteur à combustion interne a démarré et si l'embrayage raccordé entre le moteur à combustion interne et le moteur électrique est complètement fermé, le couple $M_{VM}$ du moteur à combustion interne délivré par le moteur à combustion interne est calculé en utilisant l'équation ci-dessous :

$$M_{VM} = \frac{dn_{EM}(t)}{dt} * J_{GES} - M_{EM}$$

dans laquelle $n_{EM}$ est le régime du moteur électrique, $J_{GES}$ est le couple d'inertie de l'ensemble du train d'entraînement et $M_{EM}$ est le couple de moteur électrique délivré par le moteur électrique.

Fig. 1

Fig. 2

Fig. 3

**EP 2 300 297 B1**

**IN DER BESCHREIBUNG AUFGEFÜHRTE DOKUMENTE**

**In der Beschreibung aufgeführte Patentdokumente**

• EP 1122110 A